(19) Europäisches Patentamt
European Patent Office
Office européen des brevets

(11) **EP 4 435 541 B1**

(12) **EUROPÄISCHE PATENTSCHRIFT**

(45) Veröffentlichungstag und Bekanntmachung des Hinweises auf die Patenterteilung:
**27.05.2026   Patentblatt 2026/22**

(21) Anmeldenummer: **23164078.0**

(22) Anmeldetag: **24.03.2023**

(51) Internationale Patentklassifikation (IPC):
***G05B 19/416*** *(2006.01)*

(52) Gemeinsame Patentklassifikation (CPC):
**G05B 19/416;** G05B 2219/43006

(54) **WORKFLOW ZUR EFFIZIENTEN PARAMETRIERUNG EINER NUMERISCHEN STEUERUNG**

WORKFLOW FOR EFFICIENT PARAMETERIZATION OF A NUMERICAL CONTROLLER

FLUX DE TRAVAIL POUR LE PARAMÉTRAGE EFFICACE D'UNE COMMANDE NUMÉRIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**25.09.2024   Patentblatt 2024/39**

(73) Patentinhaber: **Siemens Aktiengesellschaft**
**80333 München (DE)**

(72) Erfinder:
• **Klotzek, Andreas**
 **91052 Erlangen (DE)**

• **Krell, Preethy**
 **91056 Erlangen (DE)**
• **Kubik, Alexander**
 **91058 Erlangen (DE)**
• **Ladra, Uwe**
 **91056 Erlangen (DE)**

(74) Vertreter: **Siemens Patent Attorneys**
**Postfach 22 16 34**
**80506 München (DE)**

(56) Entgegenhaltungen:
**EP-A1- 3 518 051     EP-A1- 4 130 902**

**Beschreibung**

Die vorliegende Erfindung geht aus von einem Parametrierverfahren für eine numerische Steuerung,

- wobei die numerische Steuerung in einem Normalbetrieb iterativ während einer jeweiligen Beschleunigungszeit eine Spindel einer von der numerischen Steuerung gesteuerten Werkzeugmaschine mittels eines Spindelantriebs beschleunigt und während einer jeweiligen Bearbeitungszeit ein Werkstück mittels eines in der Spindel gehaltenen jeweiligen Werkzeugs bearbeitet, wobei der Spindelantrieb das Werkzeug während der jeweiligen Bearbeitungszeit mit einer Arbeitsdrehzahl rotiert und mit einem jeweiligen Prozessmoment beaufschlagt,
- wobei der Spindelantrieb einen Antriebsmotor aufweist, der über einen Umrichter des Spindelantriebs mit Strom versorgt wird, so dass der Spindelantrieb ein Drehmoment erzeugt.

Die vorliegende Erfindung geht weiterhin aus von einem Computerprogramm, das Maschinencode umfasst, der von einer zumindest an eine numerische Steuerung ankoppelbaren Recheneinrichtung abarbeitbar ist, wobei die Abarbeitung des Maschinencodes durch die Recheneinrichtung bewirkt, dass die Recheneinrichtung ein derartiges Parametrierverfahren ausführt.

Die vorliegende Erfindung geht weiterhin aus von einer Recheneinrichtung, die zumindest an eine numerische Steuerung ankoppelbar ist und mit einem derartigen Computerprogramm programmiert ist, so dass sie im Betrieb ein derartiges Parametrierverfahren ausführt.

Derartige Parametrierverfahren und die zugehörigen Computerprogramme und Recheneinrichtungen sind allgemein bekannt.

Bereits in Verbindung mit der Auswahl des Spindelantriebs und des zugehörigen Antriebsmotors werden meist bestimmte Annahmen über die Lastzyklen des Spindelantriebs getroffen. In der Regel liegt der Fokus auf dem erforderlichen Prozessmoment, also dem während der Bearbeitung auftretenden und geforderten Drehmoment. Es geht also vor allem darum, die erforderliche Leistung für den Bearbeitungsprozess bereitstellen zu können.

Es gibt aber weitere Anforderungen an den Betrieb des Spindelantriebs. So sind beispielsweise für manche Anwendungen und Schnittqualitäten sehr hohe Drehzahlen des Spindelantriebs erforderlich, beispielsweise dann, wenn mit einem hohen Bahnvorschub gearbeitet werden soll, um die Produktivität der Werkzeugmaschine zu erhöhen, oder weil hohe Oberflächengüten erreicht werden müssen. In derartigen Fällen ist für die erreichbare Produktivität nicht nur das Prozessmoment von Bedeutung, sondern auch die Beschleunigungszeit, die bis zum Hochlaufen des Spindelantriebs auf die entsprechende Drehzahl (also die Arbeitsdrehzahl) erforderlich ist. Derartige Beschleunigungszeiten werden bei der Auslegung des Spindelantriebs und des zugehörigen Antriebsmotors oftmals nur nachrangig berücksichtigt. In manchen Fällen umfasst die Beschleunigungszeit nur die Hochlaufzeit, also diejenige Zeit, die zum Beschleunigen der Spindel auf die Arbeitsdrehzahl (meist aus dem Stillstand heraus) erforderlich ist. Gegebenenfalls kann die Beschleunigungszeit aber zusätzlich auch die Bremszeit umfassen, die zum Abbremsen (= negative Beschleunigung) der Spindel (meist bis zum Stillstand) erforderlich ist.

Um dennoch eine entsprechende Optimierung vornehmen zu können, müssen verschiedene Informationen zusammengeführt werden. Zunächst muss für den verwendeten Antriebsmotor das Datenblatt des Motorherstellers interpretiert werden. Weiterhin muss ermittelt werden, welche elektrischen Randbedingungen an der elektrischen Ausrüstung bestehen, insbesondere welche Möglichkeiten der Umrichter zur Verfügung stellt. Die Reibungskennlinie (= Reibung als Funktion der Drehzahl) für die Spindelachse muss berechnet oder anhand von Messungen ermittelt werden. Die Werkzeugmaschine muss so programmiert werden, dass ein Hochlaufversuch durchgeführt werden kann. Die Werkzeugmaschine muss für den Hochlaufversuch vorbereitet werden. Beispielsweise muss ein Warmlaufen der Spindel erfolgen und muss die Schmierung der Spindel überprüft werden. Der Hochlaufversuch muss durchgeführt werden. Die Zeitspanne bis zum Erreichen der Arbeitsdrehzahl muss erfasst werden. Weiterhin muss geprüft werden, ob das Hochlaufen der Spindel und der Bearbeitungsprozess ohne Überhitzung durchgeführt werden können. Gegebenenfalls muss der Hochlauf der Spindel auf einen zulässigen Wert begrenzt werden. Derartige Tätigkeiten erfordern Spezialwissen und werden daher im Stand der Technik nur von Experten durchgeführt.

Aus der EP 3518051 A1 ist eine Bewegungssteuerung einer Bearbeitungsmaschine bekannt, die unter Verwendung von Parametern Folgen von Lagesollwerten ermittelt und je eine der Folgen von Lagesollwerten einer jeweiligen Antriebssteuerung vorgibt, welche unter Verwendung von Parametern Ansteuersignale für eine von einem jeweiligen Antrieb angetriebene Mechanik einer jeweiligen lagegeregelten Achse ermittelt und an den jeweiligen Antrieb ausgibt. Zur Optimierung des Betriebs der Bearbeitungsmaschine nimmt eine Recheneinrichtung über eine Benutzerschnittstelle von einem Benutzer Eigenschaften eines mittels der Bearbeitungsmaschine zu bearbeitenden Werkstücks, eine Beschreibung der Art der vorzunehmenden Bearbeitung, eine Beschreibung der Leistungsfähigkeit der Bearbeitungsmaschine und ein Optimierungsziel entgegen. Die Recheneinrichtung ermittelt anhand der entgegengenommenen Daten unter Verwendung interner Ermittlungsregeln, welche Parameter zur Optimierung des Betriebs variiert werden sollen, mit welchen Messgrößen die Bearbeitungsmaschine oder einzelne Achsen im Rahmen von Messungen betrieben werden sollen, um sinnvoll auswertbare Messergebnisse zu erhalten, und welche Kriterien zur Bewertung der anhand der Messungen ermittelten Messergebnisse verwendet werden können. Das Ergebnis ihrer Ermittlung gibt die Recheneinrichtung an den Benutzer aus.

Die Aufgabe der vorliegenden Erfindung besteht darin, Möglichkeiten zu schaffen, mittels derer die Zykluszeit, d.h. die Summe von Beschleunigungszeit und Bearbeitungszeit, und damit im Ergebnis die Produktivität der Werkzeugmaschine auch von anderen Bedienpersonen in zulässiger Weise optimiert werden kann.

Die Aufgabe wird durch ein Parametrierverfahren mit den Merkmalen des Anspruchs 1 gelöst. Vorteilhafte Ausgestaltungen des Parametrierverfahrens sind Gegenstand der abhängigen Ansprüche 2 bis 8.

Erfindungsgemäß wird ein Parametrierverfahren der eingangs genannten Art dadurch ausgestaltet,

- dass vor der Ausführung des Normalbetriebs in einer an die numerische Steuerung angekoppelten Recheneinrichtung im Rahmen eines Workflows von der numerischen Steuerung und dem Spindelantrieb einzuhaltende Grenzwerte ermittelt werden und von der Recheneinrichtung an die numerische Steuerung und den Umrichter übermittelt wird und
- dass die Recheneinrichtung im Rahmen der Abarbeitung des Workflows

-- an die numerische Steuerung einen Befehl zum kurzzeitigen Ansteuern des Spindelantriebs übermittelt, von der numerischen Steuerung während des kurzzeitigen Ansteuerns eine Beaufschlagung des Spindelantriebs mit einem Antriebsmoment und Daten über eine während des kurzzeitigen Ansteuerns bewirkte Beschleunigung der Spindel entgegennimmt und unter Berücksichtigung dieser Daten ein Trägheitsmoment der Spindel einschließlich des Spindelantriebs ermittelt,

-- direkt oder über die numerische Steuerung aus dem Umrichter des Spindelantriebs Parameter abruft, die die maximal möglichen Betriebsgrenzen des Umrichters beschreiben,

-- direkt oder über die numerische Steuerung aus dem Umrichter des Spindelantriebs Motordaten des Antriebsmotors des Spindelantriebs abruft, aus denen das maximal mögliche Drehmoment des Spindelantriebs als Funktion der Drehzahl des Antriebsmotors ermittelbar ist,

-- von einer Bedienperson Prozessdaten entgegennimmt, wobei die Prozessdaten zumindest das Prozessmoment umfassen,

-- unter Berücksichtigung der Arbeitsdrehzahl, eines unter Berücksichtigung des Trägheitsmoments der Spindel einschließlich des Spindelantriebs ermittelten resultierenden Trägheitsmoments, der aus dem Umrichter abgerufenen Parameter und der aus dem Umrichter abgerufenen Motordaten und der Prozessdaten für mögliche Beschleunigungszeiten die zugehörigen erforderlichen Ströme und Drehmomente und die hierbei im Spindelantrieb auftretenden thermischen Verluste ermittelt und für mögliche Prozessmomente die hierbei im Spindelantrieb auftretenden thermischen Verluste ermittelt,

-- Kombinationen von Beschleunigungszeiten, Prozessmomenten und Bearbeitungszeiten ermittelt, bei denen die mittleren thermischen Verluste eine vorbestimmte Verlustgrenze nicht überschreiten,

-- der Bedienperson die ermittelten Kombinationen von Beschleunigungszeiten, Prozessmomenten und Bearbeitungszeiten zur Auswahl anbietet und von der Bedienperson eine Auswahl einer derartigen Kombination entgegennimmt und

-- basierend auf der Auswahl der Bedienperson die von der numerischen Steuerung und dem Spindelantrieb einzuhaltenden Grenzwerte ermittelt,

wobei die von der numerischen Steuerung einzuhaltenden Grenzwerte den Strom und die Leistung umfassen, welche der Umrichter dem Antriebsmotor maximal zuführt, und die von dem Spindelantrieb einzuhaltenden Grenzwerte das von dem Spindelantrieb maximal aufgebrachte Drehmoment und eine Maximalbeschleunigung des Spindelantriebs umfassen.

Der Befehl zum kurzzeitigen Ansteuern des Spindelantriebs ist als solcher bekannt. Auch die zugehörige Beaufschlagung des Spindelantriebs und das Erfassen der entsprechenden Daten der Spindel sind als solche bekannt. Insbesondere sind derartige Vorgehensweisen im Rahmen des sogenannten Auto Servo Tuning bekannt. Die Ermittlung des Trägheitsmoments der Spindel (einschließlich des Spindelantriebs) erfordert hierauf aufbauend lediglich die Kenntnis des wirkenden Drehmoments und die sich ergebende Beschleunigung der Spindel.

Die Parameter, welche die Recheneinrichtung aus dem Umrichter des Spindelantriebs abruft, legen - zumindest teilweise - fest, welchen Strom und welche Leistung der Umrichter dem Antriebsmotor zuführen kann und mit welchem - in der Regel drehzahlabhängigen - Drehmoment der Antriebsmotor die Spindel beaufschlagen kann. Im Übrigen können die Parameter nach Bedarf bestimmt sein. In der Regel umfassen die Parameter die Stromgrenze der Halbleiterschalter, die Leistungsgrenze des Umrichters, die Momentgrenze des Spindelantriebs, die Momentgrenze der Spindel und/oder den Umrechnungsfaktor, mittels dessen ein von dem Umrichter in den Spindelantrieb gespeister Motorstrom in ein in dem Spindelantrieb wirkendes Drehmoment umrechenbar ist.

Die Motordaten, welche die Recheneinrichtung aus dem Umrichter des Spindelantriebs abruft, können, sofern sie die gewünschten Ermittlungen zulassen, ebenfalls nach Bedarf bestimmt sein. Oftmals umfassen die Motordaten des Antriebsmotors des Spindelantriebs den Motortyp, die Nenndrehzahl und/oder das Auslegungsmoment des Antriebsmotors.

Der Motortyp legt insbesondere fest, ob es sich bei dem Antriebsmotor um eine Synchronmaschine oder eine Asynchronmaschine usw. handelt. Die Nenndrehzahl ist diejenige Drehzahl, bei welcher der Antriebsmotor seine Nennleistung erreicht. Das Auslegungsmoment ist dasjenige Moment, bis zu dem der Antriebsmotor belastet werden kann, ohne Schäden zu erleiden.

Die Prozessdaten können zusätzlich zum Prozessmoment weitere Daten umfassen. Dies ist jedoch nicht zwingend erforderlich.

Aufgrund der Informationen, die der Recheneinrichtung nunmehr zur Verfügung stehen, also der Parameter, der Motordaten und der Prozessdaten sowie der gewünschten Arbeitsdrehzahl sowie des resultierenden Trägheitsmoments kann die Recheneinrichtung daher die bei bestimmten Betriebsweisen im Spindelantrieb auftretenden thermischen Verluste ermitteln. Damit ist auch die Ermittlung zulässiger Kombinationen von Beschleunigungszeiten, Prozessmomenten und Bearbeitungszeiten möglich, also von Kombinationen, bei denen die mittleren thermischen Verluste eine vorbestimmte Verlustgrenze nicht überschreitet. Diese Kombinationen kann die Recheneinrichtung somit der Bedienperson zur Auswahl anbieten. Basierend auf der Auswahl der Bedienperson kann sodann die Ermittlung der von der numerischen Steuerung und dem Spindelantrieb einzuhaltenden Grenzwerte erfolgen.

Die von der numerischen Steuerung und dem Spindelantrieb einzuhaltenden Grenzwerte können insbesondere den Strom und die Leistung umfassen, welche der Umrichter dem Antriebsmotor maximal zuführt. Alternativ oder zusätzlich können die von der numerischen Steuerung und dem Spindelantrieb einzuhaltenden Grenzwerte das von dem Spindelantrieb maximal aufgebrachte Drehmoment und eine Maximalbeschleunigung des Spindelantriebs umfassen.

Im einfachsten Fall kann eine in der Spindel auftretende Reibung vernachlässigt werden. Alternativ ist eine entsprechende Berücksichtigung möglich. In diesem Fall berücksichtigt die Recheneinrichtung die in der Spindel auftretende Reibung im Rahmen der Ermittlung der möglichen Beschleunigungszeiten. Es geht bei der Berücksichtigung der auftretenden Reibung jedoch - zumindest in der Regel - nicht um durch die Reibung als solche bewirkten thermischen Effekte, sondern um die (negative) Auswirkung der Reibung auf die Beschleunigung. Im Rahmen des Prozessmoments ist eine Berücksichtigung der Reibung in der Regel nicht erforderlich, da die Reibung bereits im erforderlichen Prozessmoment als solchen enthalten ist. Gegebenenfalls kann aber auch hier eine zusätzliche Berücksichtigung erfolgen.

Für die Festlegung der Kenndaten der in der Spindel auftretenden Reibung sind verschiedene Vorgehensweisen möglich. Zum einen können die Kenndaten der Recheneinrichtung von der Bedienperson vorgegeben werden. Alternativ ist es möglich, dass die Recheneinrichtung die Kenndaten der in der Spindel auftretenden Reibung anhand messtechnisch erfasster Betriebsdaten der Spindel ermittelt.

Vorzugsweise nimmt die Recheneinrichtung von der Bedienperson trägheitsrelevante Größen entgegen, welche die Recheneinrichtung bei der Ermittlung des resultierenden Trägheitsmoments zusätzlich zum Trägheitsmoment der Spindel einschließlich des Spindelantriebs berücksichtigt. Bei den zusätzlichen Größen kann es sich insbesondere um ein Trägheitsmoment eines Werkzeugs und/oder einen sicherheitshalber vorgesehenen Offset handeln.

Je nach dem Ausmaß, in dem der Bedienperson der Bearbeitungsprozess bekannt ist, ist es möglich, dass die Prozessdaten zusätzlich zum Prozessmoment auch die Bearbeitungszeit umfassen. In diesem Fall ermittelt die Recheneinrichtung vorzugsweise für Werte um das Prozessmoment und/oder die Bearbeitungszeit herum die jeweils erreichbare Beschleunigungszeit und gibt sie an die Bedienperson aus.

Alternativ ist es möglich, dass der Bedienperson der Bearbeitungsprozess im Wesentlichen unbekannt ist. In diesem Fall umfassen die Prozessdaten die Bearbeitungszeit nicht. In diesem Fall ermittelt die Recheneinrichtung die minimal mögliche Beschleunigungszeit und für die minimal mögliche Beschleunigungszeit die minimal erforderliche Bearbeitungszeit als Funktion des auftretenden Prozessmoments oder umgekehrt das maximal zulässige Prozessmoment als Funktion der Bearbeitungszeit und gibt diese Wertepaare an die Bedienperson aus.

Die Aufgabe wird weiterhin durch ein Computerprogramm mit den Merkmalen des Anspruchs 9 gelöst. Erfindungsgemäß bewirkt die Abarbeitung des Computerprogramms durch die Recheneinrichtung, dass die Recheneinrichtung ein erfindungsgemäßes Parametrierverfahren ausführt.

Die Aufgabe wird weiterhin durch eine Recheneinrichtung mit den Merkmalen des Anspruchs 10 gelöst. Erfindungsgemäß ist die Recheneinrichtung mit einem erfindungsgemäßen Computerprogramm programmiert, so dass die Recheneinrichtung im Betrieb ein erfindungsgemäßes Parametrierverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1         eine Werkzeugmaschine, eine numerische Steuerung und eine Recheneinrichtung,
FIG 2 und 3 Zeitdiagramme und
FIG 4 bis 11 Ablaufdiagramme.

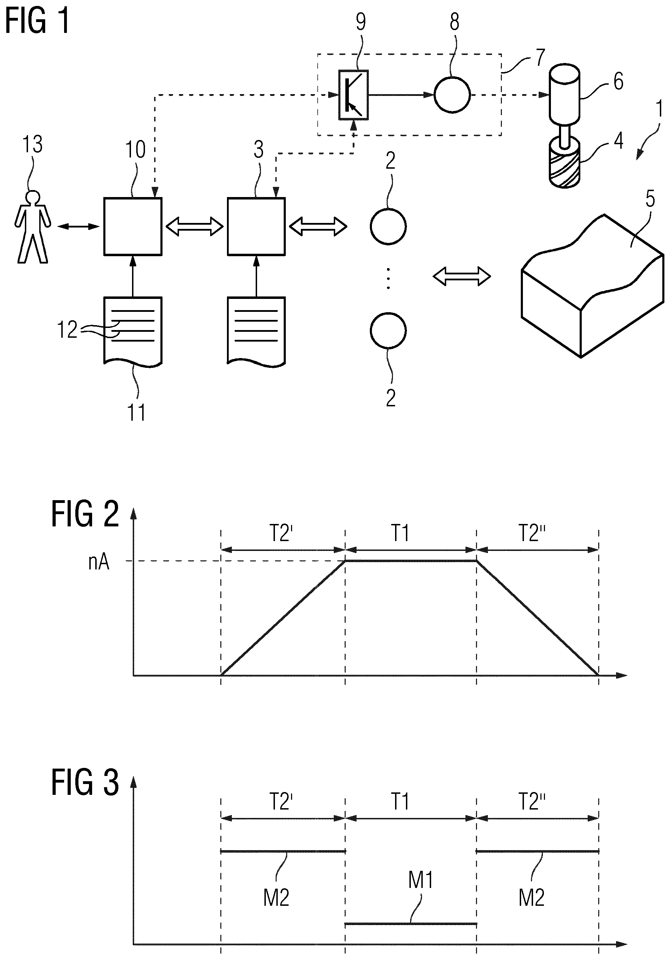

Gemäß FIG 1 weist eine Werkzeugmaschine 1 eine Anzahl von lagegeregelten Achsen 2 auf. In der Regel sind mehrere lagegeregelte Achsen 2 vorhanden. Dies ist aber nicht in allen Fällen erforderlich. Die lagegeregelten Achsen 2 werden von einer numerischen Steuerung 3 gesteuert. In einem Normalbetrieb steuert die numerische Steuerung 3 die lagegeregelten Achsen 2 an, im Falle von mehreren lagegeregelten Achsen 2 entsprechend koordiniert. Das zugehörige Teileprogramm ist in FIG 1 angedeutet, aber nicht mit einem Bezugszeichen versehen. Durch die Ansteuerung der lagegeregelten Achsen 2 wird ein Werkzeug 4 der Werkzeugmaschine 1 (beispielsweise ein Fräser) relativ zu einem Werkstück 5 entlang einer Bahn verfahren. Das Werkzeug 4 ist in einer Spindel 6 gehalten. Die Spindel 6 weist einen Spindelantrieb 7 auf, mittels dessen die Spindel 6 rotiert wird. Der Spindelantrieb 7 weist einen Antriebsmotor 8 auf, der über einen Umrichter 9 mit Strom versorgt wird. Durch die Versorgung des Antriebsmotors 8 mit Strom erzeugt der Spindelantrieb 7 ein Drehmoment.

Der Normalbetrieb ist derjenige Betrieb der numerischen Steuerung, während dessen die Bearbeitung des Werkstücks erfolgt. Der Normalbetrieb stellt also einen Produktivbetrieb dar.

Die Bearbeitung des Werkstücks 5 erfolgt gemäß FIG 2 intermittierend. Insbesondere wechseln Phasen der Bearbeitung mit Phasen der Nichtbearbeitung ab. Die jeweilige Bearbeitungsphase weist eine jeweilige Bearbeitungszeit T1 auf. Während einer jeweiligen Bearbeitungsphase rotiert die Spindel 6 das Werkzeug 4. Hierbei beaufschlagt der Spindelantrieb 7 die Spindel 6 gemäß FIG 3 mit einem jeweiligen Prozessmoment M1. Vor der jeweiligen Bearbeitung beschleunigt der Spindelantrieb 7 die Spindel 6 - meist ausgehend vom Stillstand, also Drehzahl = 0 - auf eine Arbeitsdrehzahl nA. Die zugehörige Hochlaufphase weist eine Hochlaufzeit T2' auf. Zum Beschleunigen ist ein Beschleunigungsmoment M2 wirksam. Auch die Ansteuerung der Spindel 6 und des Spindelantriebs 7 erfolgt durch die numerische Steuerung 3. Die Arbeitsdrehzahl nA kann fest vorgegeben sein oder der numerischen Steuerung 3 vorgegeben werden, beispielsweise im Rahmen des nachstehend erläuterten Workflows oder auf andere Art und Weise. Nach der Bearbeitungsphase erfolgt in einer Bremsphase ein Abbremsen, meist zum Stillstand, also auf Drehzahl = 0. Für das Abbremsen wird eine Bremszeit T2" benötigt.

Die Abfolge von Hochlaufphase, Bearbeitungsphase und Bremsphase wird iterativ ausgeführt. Oftmals erfolgt zwischen dem Abbremsen und dem Hochlaufen ein Wechsel des Werkzeugs 4. Die Bearbeitungsphasen werden also oftmals mit jeweils einem eigenen Werkzeug 4 durchgeführt. Die Bearbeitungszeiten T1 können unter Umständen von Bearbeitungsphase zu Bearbeitungsphase variieren. Soweit nachfolgend auf die Bearbeitungszeit T1 Bezug genommen wird, ist der Minimalwert der Bearbeitungszeiten T1 gemeint. In analoger Weise kann auch das Prozessmoment M1 variieren, und zwar sowohl innerhalb der jeweiligen Bearbeitungsphase als auch von Bearbeitungsphase zu Bearbeitungsphase. Soweit nachfolgend auf das Prozessmoment M1 Bezug genommen wird, ist der Maximalwert des Prozessmoments M1 gemeint.

Die Hochlaufzeit T2' wird im Wesentlichen durch das Drehmoment bestimmt, mit dem die Spindel 6 während der Hochlaufzeit T2' beaufschlagt wird, also das Beschleunigungsmoment M2. Das Beschleunigungsmoment M2 kann konstant sein oder variieren. In der Regel wird das Beschleunigungsmoment M2 jedoch stets so groß gewählt, wie dies aufgrund der Umstände des Betriebs des Spindelantriebs 7 gerade noch möglich ist. Gleiches gilt für das Abbremsen während der Bremszeit T2". Das zugehörige Bremsmoment weist in aller Regel den gleichen Betrag auf wie das Beschleunigungsmoment M2. Nachfolgend wird daher auch für das Bremsmoment das Bezugszeichen M2 verwendet bzw. allgemein nur vom Beschleunigungsmoment M2 gesprochen.

Eine Beschleunigungszeit T2 ist direkt mit dem Beschleunigungsmoment M2 gekoppelt. In manchen Fällen umfasst die Beschleunigungszeit T2 nur die Hochlaufzeit T2'. Gegebenenfalls kann die Beschleunigungszeit T2 aber zusätzlich auch die Bremszeit T2" umfassen, also die Summe von Hochlaufzeit T2' und Bremszeit T2".

Das Beschleunigungsmoment M2 ist direkt mit einer Maximalbeschleunigung aM gekoppelt, mit der die Spindel 6 betrieben werden kann. Die Maximalbeschleunigung aM wiederum beeinflusst die Hochlaufzeit T2' und die Bremszeit T2" und damit in jedem Fall die Beschleunigungszeit T2. Das Beschleunigungsmoment M2 ist seinerseits abhängig von Grenzwerten IM, PM, MM, aM, die von der numerischen Steuerung 3 und dem Spindelantrieb 7 und hier insbesondere von dem Umrichter 9 eingehalten werden. Die Ermittlung dieser Grenzwerte IM, PM, MM, aM ist der Kerngegenstand der vorliegenden Erfindung.

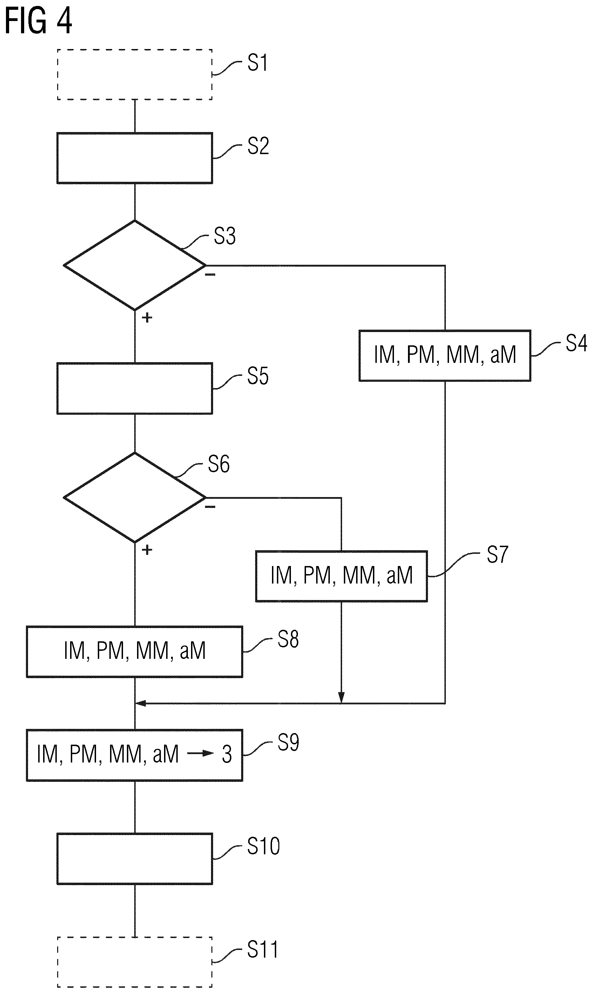

Die Ermittlung der Grenzwerte IM, PM, MM, aM erfolgt in einer Recheneinrichtung 10. Die Recheneinrichtung 10 wird zu diesem Zweck zumindest an die numerische Steuerung 3 angekoppelt. Gegebenenfalls kann die Recheneinrichtung 10, wie in FIG 1 gestrichelt angedeutet ist, auch an den Umrichter 9 angekoppelt sein. Falls die Recheneinrichtung 10 nicht direkt an den Umrichter 9 angekoppelt ist, erfolgt eine indirekte Ankopplung über die numerische Steuerung 3. Auch dies ist in FIG 1 gestrichelt angedeutet. Die Recheneinrichtung 10 ist mit einem Computerprogramm 11 programmiert. Das Computerprogramm 11 umfasst Maschinencode 12, der von der Recheneinrichtung 10 abarbeitbar ist. Aufgrund der Programmierung der Recheneinrichtung 10 mit dem Computerprogramm 11 bzw. der Abarbeitung des Maschinencodes 12 durch die Recheneinrichtung 10 führt die Recheneinrichtung 10 ein Parametrierverfahren aus. Das Parametrierverfahren und der zugehörige Workflow werden nachstehend in Verbindung mit FIG 4 und den weiteren FIG näher erläutert.

Gemäß FIG 4 wird die Recheneinrichtung 10 zunächst in einem Schritt S1 an die numerische Steuerung 3 und gegebenenfalls auch an den Umrichter 9 angekoppelt. Das Ankoppeln wird in der Regel nicht ausschließlich von der Recheneinrichtung 10, sondern zumindest teilweise von einer Bedienperson 13 (siehe FIG 1) realisiert. Der Schritt S1 ist daher in FIG 4 nur gestrichelt dargestellt.

In einem Schritt S2 wird ein übergeordneter Workflow gestartet. Das Starten kann alternativ selbsttätig durch die Recheneinrichtung 10 oder aufgrund einer Eingabe der Bedienperson 13 erfolgen. Der übergeordnete Workflow umfasst den erfindungsgemäßen Teil des Workflows, umfasst aber auch weitere Sachverhalte.

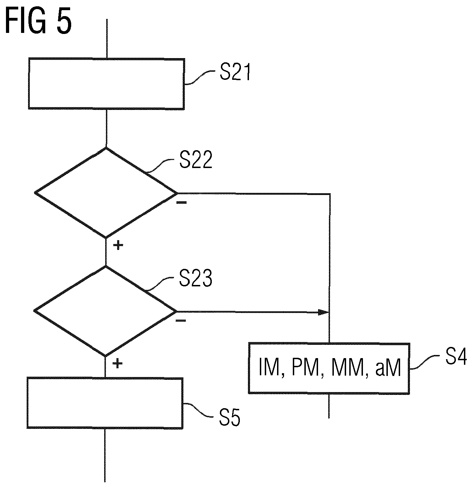

In einem Schritt S3 entscheidet die Recheneinrichtung 10 anhand von Eingaben der Bedienperson 13, ob der erfindungsgemäße Workflow ausgeführt werden soll oder nicht. Eine mögliche Implementierung des Schrittes S3 wird in Verbindung mit FIG 5 erläutert werden.

Wenn der erfindungsgemäße Workflow nicht ausgeführt werden soll, geht die Recheneinrichtung 10 zu einem Schritt S4 über. Im Schritt S4 ermittelt die Recheneinrichtung 10 Standardwerte für die einzuhaltenden Grenzwerte IM, PM, MM, aM. Die Standardwerte basieren in der Regel auf der Annahme des sogenannten S1-Betriebes des Spindelantriebs 7, also des permanenten Betriebes des Spindelantriebs 7 (Dauerlast). Der Schritt S4 kann in an sich bekannter Art und Weise implementiert werden. Er ist als solcher nicht Gegenstand der vorliegenden Erfindung. Der guten Ordnung halber sei explizit darauf hingewiesen, dass der S1-Betrieb des Spindelantriebs 7 trotz der Bezeichnung als "S1" nicht mit dem Schritt S1 des Workflows korrespondiert.

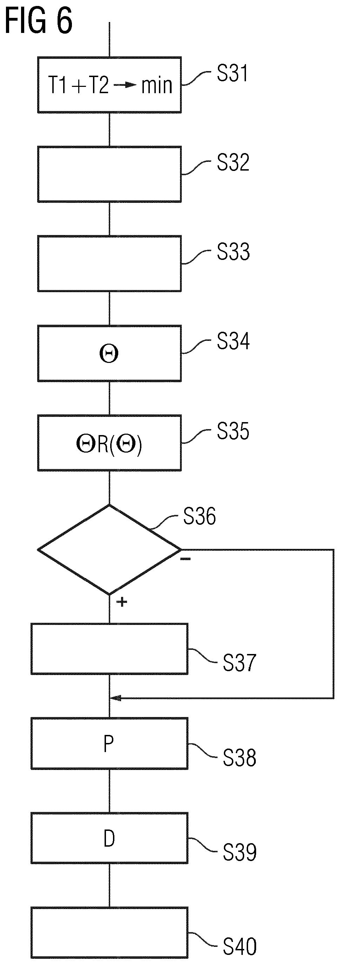

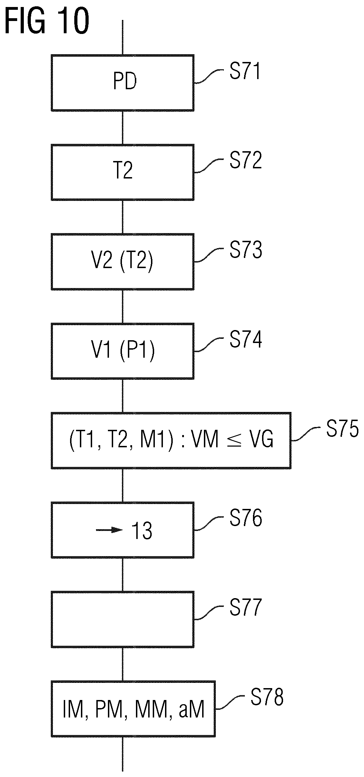

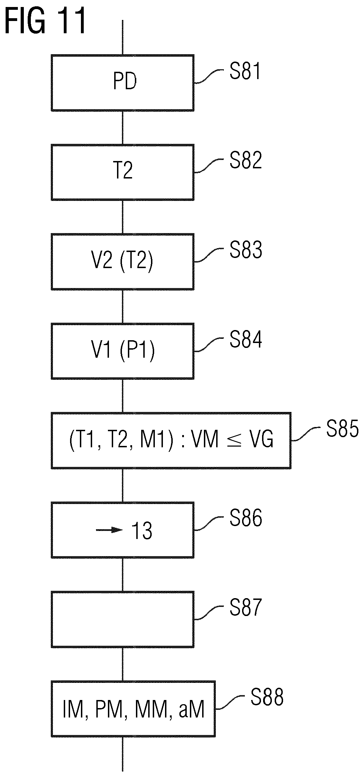

Falls der erfindungsgemäße Workflow ausgeführt werden soll, führt die Recheneinrichtung 10 in einem Schritt S5 Tätigkeiten aus, die im Rahmen des erfindungsgemäßen Workflow in jedem Fall ausgeführt werden. Der Schritt S5 wird in Verbindung mit FIG 6 erläutert werden. In einem Schritt S6 fragt die Recheneinrichtung 10 bei der Bedienperson 13 ab, ob es sich bei dem Bearbeitungsprozess, auf den die Hochlaufzeit T2 abgestimmt werden soll, um einen der Bedienperson 13 bekannten Bearbeitungsprozess handelt. Im Falle eines unbekannten Bearbeitungsprozesses geht die Recheneinrichtung 10 zu einem Schritt S7 über, im Falle eines bekannten Bearbeitungsprozesses zu einem Schritt S8. Die Schritte S7 und S8 werden in Verbindung mit den FIG 10 und 11 erläutert werden. Im den Schritten S5 bis S8 erfolgt die individualisierte Ermittlung der einzuhaltenden Grenzwerte IM, PM, MM, aM. Die Schritte S5 bis S8 stellen den Kern der vorliegenden Erfindung dar.

Sowohl vom Schritt S4 als auch von den Schritten S7 und S8 aus geht die Recheneinrichtung 10 zu einem Schritt S9 über. Im Schritt S9 übermittelt die Recheneinrichtung 10 die in einem der Schritte S4, S7 und S8 ermittelten Werte als beim Betrieb der numerischen Steuerung 3 einzuhaltende Grenzwerte IM, PM, MM, aM an die numerische Steuerung 3 und gegebenenfalls auch an den Umrichter 9.

In einem darauffolgenden Schritt S10 beendet die Recheneinrichtung 10 den Workflow. Mit der Ausführung des Schrittes S10 ist das Parametrierverfahren abgeschlossen. Es wird lediglich noch in einem Schritt S11 die Recheneinrichtung 10 zumindest von der numerischen Steuerung 3 und gegebenenfalls auch dem Umrichter 9 abgekoppelt. Das Abkoppeln wird in der Regel nicht ausschließlich von der Recheneinrichtung 10, sondern zumindest teilweise von der Bedienperson 13 realisiert. Der Schritt S11 ist daher analog zum Schritt S1 in FIG 4 nur gestrichelt dargestellt.

Nachfolgend wird in Verbindung mit FIG 5 eine mögliche Ausgestaltung des Schrittes S3 von FIG 4 näher erläutert.

Gemäß FIG 5 startet die Recheneinrichtung 10 in einem Schritt S21 eine Abfragesequenz. Im Rahmen der Abfragesequenz fragt die Recheneinrichtung 10 zunächst in einem Schritt S22 bei der Bedienperson 13 ab, ob es sich bei der Werkzeugmaschine 3 um eine Dreh- oder Fräsmaschine handelt. Wenn die Bedienperson 13 der Recheneinrichtung 10 eine Bestätigung vorgibt, fragt die Recheneinrichtung 10 sodann in einem Schritt S23 bei der Bedienperson 13 ab, ob eine spezielle (= erfindungsgemäße) Ermittlung der einzuhaltenden Grenzwerte IM, PM, MM, aM erfolgen soll. Wenn die Bedienperson 13 auch dies bestätigt, geht die Recheneinrichtung 10 zum Schritt S5 (vergleiche auch FIG 4) über. Wenn die Bedienperson 13 der Recheneinrichtung 10 hingegen beim Schritt S22 oder beim Schritt S23 keine entsprechende Bestätigung vorgibt, geht die Recheneinrichtung 10 zum Schritt S4 (vergleiche auch FIG 4) über. Die Abfrage des Schrittes S23 kann beispielsweise umfassen, ob die Werkzeugmaschine im Formenbau eingesetzt werden soll und/oder ob feine Konturen und hohe Produktivität angestrebt werden.

Nachfolgend wird in Verbindung mit FIG 6 eine mögliche Ausgestaltung des Schrittes S5 von FIG 4 näher erläutert.

Gemäß FIG 6 selektiert die Recheneinrichtung 10 in einem Schritt S31 aufgrund einer Eingabe der Bedienperson 13 das Ziel des Workflows, nämlich die Zykluszeit (das ist die Summe von Bearbeitungszeit T1 und Beschleunigungszeit T2) zu minimieren. Zu diesem Zweck wird der sogenannte S6-Betrieb des Spindelantriebs 7 gewählt, also des alternierenden Betriebes mit Hochbelastungsphasen und Erholungsphasen. Die Hochbelastungsphasen korrespondieren mit den Hochlaufphasen und/oder den Bremsphasen, die Erholungsphasen mit den Bearbeitungsphasen. Der guten Ordnung halber sei explizit darauf hingewiesen, dass der S6-Betrieb des Spindelantriebs 7 trotz der Bezeichnung als "S6" nicht mit dem Schritt S6 des Workflows korrespondiert. Die Situation ist analog zum Verhältnis zwischen dem S1-Betrieb des Spindelantriebs 7 und dem Schritt S1.

In einem Schritt S32 übermittelt die Recheneinrichtung 10 an die numerische Steuerung 3 einen Befehl zum (kurzzeitigen) Ansteuern des Spindelantriebs 7, so dass der Spindelantrieb 7 mit einem Antriebsmoment beaufschlagt wird.

In einem Schritt S33 nimmt die Recheneinrichtung 10 von der numerischen Steuerung 3 Messdaten entgegen. Die Messdaten werden von der numerischen Steuerung 3 während des kurzzeitigen Ansteuerns erfasst. Die Messdaten sind derart bestimmt, dass aus ihnen die während des kurzzeitigen Ansteuerns bewirkte Beschleunigung der Spindel 6 ermittelbar ist. Die Messdaten können die Drehstellung oder die Drehzahl (oder hierfür charakteristische Daten) als Funktion der Zeit umfassen. Gegebenenfalls können sie zusätzlich beispielsweise das von dem Antriebsmotor 8 erzeugte Drehmoment (oder hierfür charakteristische Daten) umfassen.

Die Implementierung der Schritte S32 und S33 als solche sind Fachleuten bekannt.

In einem Schritt S34 ermittelt die Recheneinrichtung 10 sodann unter Berücksichtigung der Messdaten ein Trägheitsmoment Θ der Spindel 6 einschließlich des Spindelantriebs 7. Insbesondere ist der Recheneinrichtung 10 - entweder a priori oder aufgrund der Messdaten - auch das von dem Antriebsmotor 8 erzeugte Drehmoment bekannt, so dass in Verbindung mit der bewirkten Beschleunigung (die bewirkte Beschleunigung kann aus den Messdaten ermittelt werden) das Trägheitsmoment Θ ohne weiteres ermittelbar ist.

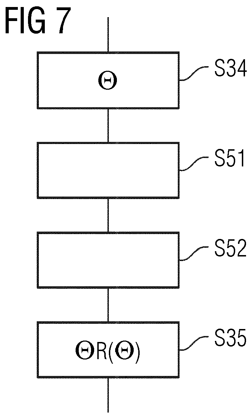

In einem Schritt S35 ermittelt die Recheneinrichtung 10 ein resultierendes Trägheitsmoment ΘR. Das resultierende Trägheitsmoment ΘR hängt von dem im Schritt S34 ermittelten Trägheitsmoment Θ ab. Im einfachsten Fall ist das resultierende Trägheitsmoment ΘR mit dem im Schritt S34 ermittelten Trägheitsmoment Θ identisch. Es ist jedoch auch möglich, einen anderen Wert zu ermitteln. Dies wird später noch in Verbindung mit FIG 7 erläutert werden.

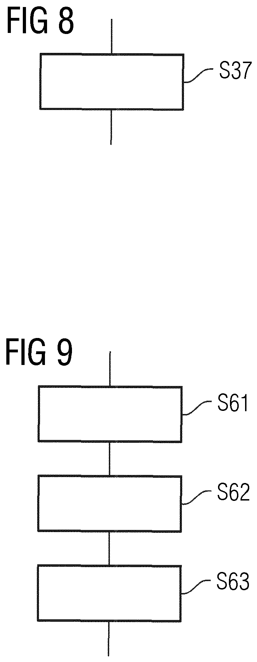

In einem Schritt S36 fragt die Recheneinrichtung 10 bei der Bedienperson 13 ab, ob die auftretende Reibung explizit berücksichtigt werden soll. Wenn dies der Fall ist, nimmt die Recheneinrichtung 10 einem Schritt S37 entsprechende Reibungsdaten entgegen. Anderenfalls wird der Schritt S37 übersprungen. Mögliche Ausgestaltungen des Schrittes S37 werden noch in Verbindung mit den FIG 8 und 9 erläutert werden.

In einem Schritt S38 ruft die Recheneinrichtung 10 aus dem Umrichter 9 des Spindelantriebs 7 Parameter P ab, die die maximal möglichen Betriebsgrenzen des Umrichters 9 beschreiben. Das Abrufen der Parameter P kann direkt aus dem Umrichter 9 erfolgen, sofern eine entsprechende Kopplung der Recheneinrichtung 10 mit dem Umrichter 9 besteht. Alternativ kann ein indirektes Abrufen über die numerische Steuerung 3 erfolgen.

Die Parameter P, welche die Recheneinrichtung 10 aus dem Umrichter 9 abruft, umfassen in der Regel einen, mehrere oder alle der folgenden Werte:

- die Stromgrenze der Halbleiterschalter des Umrichters 9, also den Strom, den die Halbleiterschalter maximal führen können,
- die Leistungsgrenze des Umrichters 9, also die Leistung, die der Umrichter 9 dem Antriebsmotor 8 maximal zuführen kann bzw. die Spindel 6 maximal verkraftet,
- die Momentgrenze des Spindelantriebs 7, also das Drehmoment, das der Spindelantrieb 7 maximal erzeugen kann,
- die Momentgrenze der Spindel 6, also das Drehmoment, das der Spindel 6 von dem Spindelantriebs 7 maximal zugeführt werden darf, und
- den Umrechnungsfaktor, mittels dessen ein von dem Umrichter 9 in den Spindelantrieb 7 gespeister Motorstrom in ein in dem Spindelantrieb 7 wirkendes Drehmoment umrechenbar ist.

In einem Schritt S39 ruft die Recheneinrichtung 10 aus dem Umrichter 9 des Spindelantriebs 7 Motordaten D ab, aus denen das maximal mögliche Drehmoment des Spindelantriebs 7 als Funktion der Drehzahl des Antriebsmotors 8 ermittelbar ist. Analog zur Vorgehensweise bei den Parametern P kann alternativ ein direktes Abrufen aus dem Umrichter 9 oder ein indirektes Abrufen über die numerische Steuerung 3 erfolgen.

Die Motordaten D, welche die Recheneinrichtung 10 aus dem Umrichter 9 abruft, umfassen in der Regel einen, mehrere oder alle der folgenden Werte:

- den Motortyp, also beispielsweise ob es sich um eine Synchronmaschine oder eine Asynchronmaschine handelt,
- die Nenndrehzahl, also diejenige Drehzahl, bis zu der der Antriebsmotor 8 mit seinem Auslegungsmoment betrieben werden kann (höhere Drehzahlen sind entweder nicht möglich oder es muss das Drehmoment reduziert werden [Feldschwächungsbetrieb]), und
- das Auslegungsmoment des Antriebsmotors 8, das heißt das Drehmoment, das von dem Antriebsmotor 8 maximal generiert werden kann (bei einem höheren Drehmoment würde der Antriebsmotor 8 beschädigt oder zerstört werden).

In einem Schritt S40 ermittelt die Recheneinrichtung 10 eine Drehmomentkennlinie für den Antriebsmotor 8. Sie ermittelt also das maximal mögliche Drehmoment als Funktion der Drehzahl. Die Ermittlung erfolgt unter Verwertung der Parameter P und der Motordaten D. Die Implementierung des Schrittes S40 ist Fachleuten als solche bekannt.

Nachfolgend wird in Verbindung mit FIG 7 eine mögliche Ausgestaltung des Schrittes S35 von FIG 6 erläutert.

Gemäß FIG 7 sind zusätzlich zu den Schritten S34 und S35 ein Schritt S51 und/oder ein Schritt S52 vorhanden. In den Schritten S51 und S52 nimmt die Recheneinrichtung 10 von der Bedienperson 13 trägheitsrelevante Größen entgegen. Diese Größen berücksichtigt die Recheneinrichtung 10 bei der Ermittlung des resultierenden Trägheitsmoments $\Theta R$ zusätzlich zu dem im Schritt S34 ermittelten Trägheitsmoment $\Theta$. Beispielsweise kann im Schritt S51 ein Trägheitsmoment des Werkzeugs 4 vorgegeben werden. Hier wird im Falle mehrerer möglicher Werkzeuge in aller Regel das größte Trägheitsmoment vorgegeben. Im Schritt S52 kann ein (frei wählbarer) Offset vorgegeben werden, sozusagen eine Art Reserve für alle Fälle. Das resultierende Trägheitsmoment $\Theta R$ ergibt sich durch die Summe des im Schritt S34 ermittelten Trägheitsmoments $\Theta$ und der in den Schritten S51 und S52 vorgegebenen Werte.

Nachfolgend wird in Verbindung mit FIG 8 eine mögliche Ausgestaltung des Schrittes S37 erläutert. Gemäß FIG 8 ist der Schritt S37 durch eine Abfrage bei der Bedienperson 13 implementiert. Gemäß der Ausgestaltung von FIG 8 werden der Recheneinrichtung 10 also von der Bedienperson 13 Kenndaten vorgegeben, die für die in der Spindel 6 auftretende Reibung charakteristisch sind.

Nachfolgend wird in Verbindung mit FIG 9 eine alternative mögliche Ausgestaltung des Schrittes S37 erläutert. Gemäß FIG 9 ist der Schritt S37 in Form von Schritten S61 bis S63 implementiert.

Im Schritt S61 stößt die Recheneinrichtung 10 bei der numerischen Steuerung 3 einen Messprozess zum messtechnischen Erfassen von Betriebsdaten der Spindel 6 an. Die Betriebsdaten sind derart bestimmt, dass Kenndaten, die für die in der Spindel 6 auftretende Reibung charakteristisch, anhand der Betriebsdaten ermittelt werden können. Im Schritt S62 nimmt die Recheneinrichtung 10 von der numerischen Steuerung 3 die Betriebsdaten entgegen. Im Schritt S63 ermittelt die Recheneinrichtung 10 die Kenndaten für die Reibung.

Die Schritte S61 bis S63 können beispielsweise derart implementiert sein, dass ein Rotieren des Spindelantriebs 7 mit einer bestimmten Drehzahl angestoßen wird und das Drehmoment erfasst wird, das zum Beibehalten dieser Drehzahl benötigt wird. Da im Falle völliger Reibungslosigkeit das Drehmoment zum Beibehalten einer bestimmten Drehzahl 0 ist, muss das erforderliche Drehmoment auf die Reibung zurückgehen. Gegebenenfalls kann diese Vorgehensweise für mehrere Drehzahlen wiederholt werden. Es sind auch andere Möglichkeiten zur Ermittlung der Reibung gegeben.

Nachfolgend wird in Verbindung mit FIG 10 eine mögliche Ausgestaltung des Schrittes S7 von FIG 5 erläutert.

Gemäß FIG 10 nimmt die Recheneinrichtung 10 von der Bedienperson 13 in einem Schritt S71 Prozessdaten PD entgegen. Die Prozessdaten PD umfassen das Prozessmoment M1, also im Sinne der vorliegenden Erfindung den maximal auftretenden Wert des Prozessmoments M1. Aufgrund des Umstands, dass bei der Vorgehensweise von FIG 10 vorausgesetzt wird, dass der Bearbeitungsprozess nicht bekannt ist, werden im Schritt S71 in der Regel keine weiteren Daten vorgegeben. Insbesondere umfassen die Prozessdaten PD nicht die Bearbeitungszeit T1. Es ist aber möglich, dass im Schritt S71 die Arbeitsdrehzahl nA mit vorgegeben wird.

In einem Schritt S72 ermittelt die Recheneinrichtung 10 die minimal mögliche Beschleunigungszeit T2 und die zugehörigen erforderlichen Ströme (welche der Umrichter 9 dem Antriebsmotor 8 zuführt) und Drehmomente (welche der Antriebsmotor 8 generiert).

Genau genommen setzt die Recheneinrichtung 10 zunächst den Strom auf seinen Maximalwert (= Stromgrenze des Umrichters 9). Sodann prüft die Recheneinrichtung 10, ob die sonstigen Randbedingungen des Umrichters 9, insbesondere dessen Leistungsgrenze eingehalten werden. Sodann ermittelt die Recheneinrichtung 10 das zugehörige generierte Drehmoment. In diese Ermittlung geht insbesondere der Umrechnungsfaktor ein. Sodann prüft die Recheneinrichtung 10, ob die Momentgrenze des Spindelantriebs 7 und die Momentgrenze der Spindel 6 sowie das Auslegungsmoment des Antriebsmotors 8 eingehalten werden.

Werden alle Grenzen eingehalten, wird angenommen, dass der Spindelantrieb 7 mit dem maximal möglichen Strom betrieben wird. Ist dies nicht der Fall, wird der Strom reduziert, bis alle Grenzen eingehalten werden.

Auf diese Art und Weise wird, in der Regel ausgehend von Drehzahl = 0, iterativ in kleinen Zeitschritten mit jeweiliger Anpassung der erreichten Drehzahl der Hochlauf der Spindel 6 simuliert, bis die Arbeitsdrehzahl nA erreicht ist. In die Änderung der Drehzahl von Zeitschritten zu Zeitschritt gehen das resultierende Trägheitsmoment $\Theta R$ des jeweiligen Zeitschritts und - sofern berücksichtigt - die in der Spindel 6 auftretende Reibung mit ein. Die Reibung hat also, sofern sie berücksichtigt wird, Auswirkungen auf die mögliche Hochlaufzeit T2'. In analoger Weise kann die Recheneinrichtung 10 auch die Bremszeit T2" ermitteln.

In einem Schritt S73 ermittelt die Recheneinrichtung 10 die während der ermittelten Beschleunigungszeit T2 auftretenden thermischen Verluste V2. Oftmals ist es ausreichend, nur die Kupferverluste in der Wicklung des Antriebsmotors 8 zu berücksichtigen. Gegebenenfalls können auch die Eisenverluste mit berücksichtigt werden. Gegebenenfalls können zusätzlich auch in einer eigenen Rechnung die im Umrichter 9 auftretenden Verluste ermittelt werden.

Die Schritte S72 und S73 können gegebenenfalls unter Begrenzung des Stroms auf Werte unterhalb der Stromgrenze wiederholt werden, so dass für bestimmte maximale Ströme die jeweils zugehörige Beschleunigungszeit T2 ermittelt werden kann.

In einem Schritt S74 ermittelt die Recheneinrichtung 10 für das Prozessmoment M1 die zugehörigen Verluste V1. In die Ermittlung der Verluste V1 gehen der Umrechnungsfaktor, eventuell der Motortyp und eventuell die Arbeitsdrehzahl nA ein. Soweit das Prozessmoment M1 die Reibung noch nicht berücksichtigt, kann diese gegebenenfalls mit berücksichtigt werden. Der Schritt S74 wird nicht nur für das im Schritt S71 vorgegebene Prozessmoment M1 ausgeführt, sondern auch für einige in der Nähe liegende Werte darüber und/oder darunter. Dadurch kann für mehrere Prozessmomente M1 jeweils die zugehörigen Verluste V1 ermittelt werden. Die Ermittlung der

In einem Schritt S75 ermittelt die Recheneinrichtung 10 Kombinationen von Beschleunigungszeiten T2, Prozessmomenten M1 und Bearbeitungszeiten T1, deren mittlere thermische Verluste VM eine vorbestimmte Verlustgrenze VG nicht überschreiten. Insbesondere ergibt sich der jeweilige mittlere thermische Verlust VM für eine bestimmte Beschleunigungszeit T2, den zugehörigen thermischen Verlust V2, ein bestimmtes Prozessmoment M1, den zugehörigen thermischen Verlust V1 und eine bestimmte Bearbeitungszeit T1 zu

$$VM = (T1V1+T2V2)/(T1+T2)$$

Hierbei ist - bei festgelegtem Maximalstrom - die Beschleunigungszeit T2 festgelegt, weil sie so klein wie möglich bestimmt wird. Die zugehörigen thermischen Verluste V2 ergeben sich durch den entsprechenden Betrieb des Spindelantriebs 7 und sind daher ebenfalls festgelegt. Die thermischen Verluste V1 sind durch das Prozessmoment M1 (gegebenenfalls zuzüglich Reibung) bestimmt und sind daher ebenfalls festgelegt. Damit verbleibt eine einzige Größe, die noch variiert werden kann, nämlich die Bearbeitungszeit T1. Die Recheneinrichtung 10 kann daher für die verschiedenen angesetzten Prozessmomente M1 die jeweils minimal erforderliche Bearbeitungszeit T1 ermitteln, also die minimal erforderliche Bearbeitungszeit T1 als Funktion des auftretenden Prozessmoments M1. Alternativ ist es auch möglich, für verschiedene angesetzte Bearbeitungszeiten T1 das jeweils maximal mögliche Prozessmoment M1 zu ermitteln, also das maximal mögliche Prozessmoment M1 als Funktion der Bearbeitungszeit T1.

In einem Schritt S76 bietet die Recheneinrichtung 10 die ermittelten Kombinationen von Beschleunigungszeiten T2, Prozessmomenten M1 und Bearbeitungszeiten T1 - also die zulässigen Kombinationen - der Bedienperson 13 zur Auswahl an. In einem Schritt S77 nimmt die Recheneinrichtung 10 von der Bedienperson 13 eine Auswahl einer derartigen Kombination entgegen. In einem Schritt S78 ermittelt die Recheneinrichtung 10 sodann, basierend auf der Auswahl der Bedienperson 13, die einzuhaltenden Grenzwerte IM, PM, MM, aM. Die ermittelten Grenzwerte IM, PM, MM, aM können insbesondere den Strom IM und die Leistung PM umfassen, welche der Umrichter 9 dem Antriebsmotor 8 maximal zuführt. Alternativ oder zusätzlich können die von der numerischen Steuerung 3 und dem Spindelantrieb 7 einzuhaltenden Grenzwerte das von dem Spindelantrieb 7 maximal aufgebrachte Drehmoment MM und eine Maximalbeschleunigung aM des Spindelantriebs 7 umfassen.

Nachfolgend wird in Verbindung mit FIG 11 eine mögliche Ausgestaltung des Schrittes S8 von FIG 5 erläutert.

Gemäß FIG 11 nimmt die Recheneinrichtung 10 von der Bedienperson 13 in einem Schritt S81 die Prozessdaten PD entgegen. Der Schritt S81 von FIG 11 korrespondiert inhaltlich mit dem Schritt S71 von FIG 10. Aufgrund des Umstands, dass bei der Vorgehensweise von FIG 11 vorausgesetzt wird, dass der Bearbeitungsprozess bekannt ist, kann im Schritt S81 jedoch zusätzlich auch die Bearbeitungszeit T1 mit vorgegeben werden.

In einem Schritt S82 ermittelt die Recheneinrichtung 10 für einen bestimmten maximalen Strom eine mögliche Hochlaufzeit T2 und die zugehörigen erforderlichen Ströme (welche der Umrichter 9 dem Antriebsmotor 8 zuführt) und Drehmomente (welche der Antriebsmotor 8 generiert). Im Kern korrespondiert der Schritt S82 von FIG 11 mit dem Schritt S72 von FIG 10. Der Unterschied besteht lediglich darin, dass für den zulässigen Strom nicht notwendigerweise der Maximalwert angesetzt wird.

In einem Schritt S83 ermittelt die Recheneinrichtung 10 die während der ermittelten Hochlaufzeit T2 auftretenden thermischen Verluste V2. Der Schritt S83 von FIG 11 korrespondiert inhaltlich mit dem Schritt S73 von FIG 10.

Die Schritte S82 und S83 werden unter Begrenzung des Stroms auf voneinander verschiedene Werte unterhalb der Stromgrenze wiederholt.

In einem Schritt S84 ermittelt die Recheneinrichtung 10 für das Prozessmoment M1 und einige in der Nähe liegende Werte darüber und/oder darunter jeweils die zugehörigen Verluste V1. Der Schritt S84 von FIG 11 korrespondiert inhaltlich mit dem Schritt S74 von FIG 10.

In einem Schritt S85 ermittelt die Recheneinrichtung 10 Kombinationen von Beschleunigungszeiten T2, Prozessmomenten M1 und Bearbeitungszeiten T1, deren mittlere thermische Verluste VM eine vorbestimmte Verlustgrenze VG nicht überschreiten.

Insbesondere ergibt sich der jeweilige mittlere thermische Verlust VM auf die gleiche Art und Weise wie bereits für FIG 10 erläutert. Im Unterschied zur Vorgehensweise von FIG 10 ist bei FIG 11 jedoch die Beschleunigungszeit T2 nicht festgelegt. Stattdessen ist die Bearbeitungszeit T1 festgelegt, weil sie im Schritt S81 vorgegeben wird. Genau genommen könnte im Rahmen des Schrittes S85 somit ein einziger Wert ermittelt werden, nämlich die erreichbare Beschleunigungszeit T2, bei welcher die Verlustgrenze VG gerade noch eingehalten wird. In der Praxis ist es jedoch von Vorteil, das Prozessmoment M1 und/oder die Bearbeitungszeit T1 innerhalb gewisser Grenzen zu variieren und die jeweils zugehörige erreichbare Beschleunigungszeit T2 zu ermitteln, also für Werte um das vorgegebene Prozessmoment M1 und/oder die vorgegebene Bearbeitungszeit T1 herum.

In einem Schritt S86 bietet die Recheneinrichtung 10 die ermittelten Kombinationen von Beschleunigungszeiten T2, Prozessmomenten M1 und Bearbeitungszeiten T1 - also die zulässigen Kombinationen - der Bedienperson 13 zur Auswahl an. In einem Schritt S87 nimmt die Recheneinrichtung 10 von der Bedienperson 13 eine Auswahl einer derartigen Kombination entgegen. In einem Schritt S88 ermittelt die Recheneinrichtung 10 sodann, basierend auf der Auswahl der Bedienperson 13, die einzuhaltenden Grenzwerte IM, PM, MM, aM. Die Schritte S86 bis S88 von FIG 11 korrespondieren mit den Schritten S76 bis S78 von FIG 10.

Zusammengefasst betrifft die vorliegende Erfindung somit folgenden Sachverhalt:

Eine numerische Steuerung 3 beschleunigt in einem Normalbetrieb iterativ während einer Beschleunigungszeit T2 eine Spindel 6 mittels eines Spindelantriebs 7 und bearbeitet während einer sich daran anschließenden Bearbeitungszeit T1 ein Werkstück 5 mittels eines in der Spindel 6 gehaltenen jeweiligen Werkzeugs 4. Der Spindelantrieb 7 rotiert das Werkzeug 4 während der Bearbeitungszeit T1 mit einer Arbeitsdrehzahl nA und beaufschlagt es mit einem Prozessmoment M1. Der Spindelantrieb 7 weist einen Umrichter 9 auf, der einen Antriebsmotor 8 des Spindelantriebs 7 mit Strom versorgt. Vor dem Normalbetrieb werden in einer an die numerische Steuerung 3 angekoppelten Recheneinrichtung 10 im Rahmen eines Workflows von der numerischen Steuerung 3 und dem Spindelantrieb 7 einzuhaltende Grenzwerte IM, PM, MM, aM ermittelt und an die numerische Steuerung 3 und den Umrichter 9 übermittelt. Hierbei übermittelt die Recheneinrichtung 10 an die numerische Steuerung 3 einen Befehl zum kurzzeitigen Ansteuern des Spindelantriebs 7, nimmt von der numerischen Steuerung 3 eine zugehörige Beaufschlagung des Spindelantriebs 7 mit einem Antriebsmoment und Daten über eine zugehörige bewirkte Beschleunigung der Spindel 6 entgegen und ermittelt daraus ein Trägheitsmoment $\Theta$ der Spindel 6 einschließlich des Spindelantriebs 7. Die Recheneinrichtung 10 ruft aus dem Umrichter 9 Parameter P, die die maximal möglichen Betriebsgrenzen des Umrichters 9 beschreiben, und Motordaten D des Antriebsmotors 8, aus denen das maximal mögliche Drehmoment des Spindelantriebs 7 als Funktion der Drehzahl des Antriebsmotors 8 ermittelbar ist, ab. Die Recheneinrichtung 10 nimmt von einer Bedienperson 13 Prozessdaten PD entgegen, die zumindest das Prozessmoment M1 umfassen. Die Recheneinrichtung 10 ermittelt unter Berücksichtigung der Arbeitsdrehzahl nA, eines unter Berücksichtigung des Trägheitsmoments $\Theta$ der Spindel 6 einschließlich des Spindelantriebs

7 ermittelten resultierenden Trägheitsmoments $\Theta R$, der Parameter P und der Motordaten D und der Prozessdaten PD für mögliche Beschleunigungszeiten T2 die zugehörigen erforderlichen Ströme und Drehmomente und die hierbei im Spindelantrieb 7 auftretenden thermischen Verluste V2 und für mögliche Prozessmomente M1 die hierbei im Spindelantrieb 7 auftretenden thermischen Verluste V1. Die Recheneinrichtung 10 ermittelt Kombinationen von Beschleunigungszeiten T2, Prozessmomenten M1 und Bearbeitungszeiten T1, deren mittlere thermische Verluste VM eine vorbestimmte Verlustgrenze VG nicht überschreiten, bietet der Bedienperson 13 die ermittelten Kombinationen zur Auswahl an, nimmt von der Bedienperson 13 eine Auswahl einer derartigen Kombination entgegen und ermittelt basierend auf dieser Auswahl die einzuhaltenden Grenzwerte IM, PM, MM, aM.

Die vorliegende Erfindung weist viele Vorteile auf. Insbesondere können aufgrund des erfindungsgemäßen, geführten Workflows die einzuhaltenden Grenzwerte IM, PM, MM, aM unter Berücksichtigung der alternierenden Abfolge von Beschleunigungszeiten T2 und Bearbeitungszeiten T1 auch von einer Bedienperson 13 optimiert werden, die kein Experte ist. Die aktuellen Begrenzungen, die beim Betrieb der Spindel 6 und des Spindelantriebs 7 berücksichtigt werden müssen, können aus der numerischen Steuerung 3 und dem Umrichter 9 ausgelesen werden und bei der Bestimmung der einzuhaltenden Grenzwerte IM, PM, MM, aM berücksichtigt werden. Auch die Drehmomentkennlinie kann aus den im Umrichter 9 hinterlegten Parametern P und Motordaten D ermittelt werden. Eine Überlastung der Spindel 6 und des Spindelantriebs 7 (einschließlich des Antriebsmotors 8 und des Umrichters 9) kann zuverlässig vermieden werden. Das erfindungsgemäße Parametrierverfahren ist insbesondere dann von Vorteil, wenn die Arbeitsdrehzahl nA einen großen Wert aufweist, so dass auch die Beschleunigungszeit T2 entsprechend groß ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Parametrierverfahren für eine numerische Steuerung (3),

- wobei die numerische Steuerung (3) in einem Normalbetrieb iterativ während einer jeweiligen Beschleunigungszeit (T2) eine Spindel (6) einer von der numerischen Steuerung (3) gesteuerten Werkzeugmaschine mittels eines Spindelantriebs (7) beschleunigt und während einer jeweiligen Bearbeitungszeit (T1) ein Werkstück (5) mittels eines in der Spindel (6) gehaltenen jeweiligen Werkzeugs (4) bearbeitet, wobei der Spindelantrieb (7) das Werkzeug (4) während der jeweiligen Bearbeitungszeit (T1) mit einer Arbeitsdrehzahl (nA) rotiert und mit einem jeweiligen Prozessmoment (M1) beaufschlagt,

- wobei der Spindelantrieb (7) einen Antriebsmotor (8) aufweist, der über einen Umrichter (9) des Spindelantriebs (7) mit Strom versorgt wird, so dass der Spindelantrieb (7) ein Drehmoment erzeugt,

- wobei vor der Ausführung des Normalbetriebs in einer an die numerische Steuerung (3) angekoppelten Recheneinrichtung (10) im Rahmen eines Workflow von der numerischen Steuerung (3) und dem Spindelantrieb (7) einzuhaltende Grenzwerte (IM, PM, MM, aM) ermittelt werden und von der Recheneinrichtung (10) an die numerische Steuerung (3) und den Umrichter (9) übermittelt werden und

- wobei die Recheneinrichtung (10) im Rahmen der Abarbeitung des Workflows

-- an die numerische Steuerung (3) einen Befehl zum kurzzeitigen Ansteuern des Spindelantriebs (7) übermittelt, von der numerischen Steuerung (3) während des kurzzeitigen Ansteuerns eine Beaufschlagung des Spindelantriebs (7) mit einem Antriebsmoment und Daten über eine während des kurzzeitigen Ansteuerns bewirkte Beschleunigung der Spindel (6) entgegennimmt und unter Berücksichtigung dieser Daten ein Trägheitsmoment ($\Theta$) der Spindel (6) einschließlich des Spindelantriebs (7) ermittelt,

-- direkt oder über die numerische Steuerung (3) aus dem Umrichter (9) des Spindelantriebs (7) Parameter (P) abruft, die die maximal möglichen Betriebsgrenzen des Umrichters (9) beschreiben,

-- direkt oder über die numerische Steuerung (3) aus dem Umrichter (9) des Spindelantriebs (7) Motordaten (D) des Antriebsmotors (8) des Spindelantriebs (7) abruft, aus denen das maximal mögliche Drehmoment des Spindelantriebs (7) als Funktion der Drehzahl des Antriebsmotors (8) ermittelbar ist,

-- von einer Bedienperson (13) Prozessdaten (PD) entgegennimmt, wobei die Prozessdaten (PD) zumindest das Prozessmoment (M1) umfassen,

-- unter Berücksichtigung der Arbeitsdrehzahl (nA), eines unter Berücksichtigung des Trägheitsmoments ($\Theta$) der Spindel (6) einschließlich des Spindelantriebs (7) ermittelten resultierenden Trägheitsmoments ($\Theta$R), der aus dem Umrichter (9) abgerufenen Parameter (P) und der aus dem Umrichter (9) abgerufenen Motordaten (D) und der Prozessdaten (PD) für mögliche Beschleunigungszeiten (T2) die zugehörigen erforderlichen Ströme und Drehmomente und die hierbei im Spindelantrieb (7) auftretenden thermischen Verluste (V2) ermittelt und für mögliche Prozessmomente (M1) die hierbei im Spindelantrieb (7) auftretenden thermischen Verluste (V1) ermittelt,

-- Kombinationen von Beschleunigungszeiten (T2), Prozessmomenten (M1) und Bearbeitungszeiten (T1) ermittelt, bei denen die mittleren thermischen Verluste (VM) eine vorbestimmte Verlustgrenze (VG) nicht überschreiten,

-- der Bedienperson (13) die ermittelten Kombinationen von Beschleunigungszeiten (T2), Prozessmomenten (M1) und Bearbeitungszeiten (T1) zur Auswahl anbietet und von der Bedienperson (13) eine Auswahl einer derartigen Kombination entgegennimmt und

-- basierend auf der Auswahl der Bedienperson (13) die von der numerischen Steuerung (3) und dem Spindelantrieb (9) einzuhaltenden Grenzwerte (IM, PM, MM, aM) ermittelt,

wobei die von der numerischen Steuerung (3) einzuhaltenden Grenzwerte (IM, PM) den Strom (IM) und die Leistung (PM) umfassen, welche der Umrichter (9) dem Antriebsmotor (8) maximal zuführt, und die von dem Spindelantrieb (7) einzuhaltenden Grenzwerte (MM, aM) das von dem Spindelantrieb (7) maximal aufgebrachte Drehmoment (MM) und eine Maximalbeschleunigung (aM) des Spindelantriebs (7) umfassen.

**2.** Parametrierverfahren nach Anspruch 1, **dadurch gekennzeichnet ,** **dass** die Parameter (P), welche die Recheneinrichtung (10) aus dem Umrichter (9) abruft, die Stromgrenze der Halbleiterschalter, die Leistungsgrenze des Umrichters (9), die Momentgrenze des Spindelantriebs (7), die Momentgrenze der Spindel (6) und/oder den Umrechnungsfaktor, mittels dessen ein von dem Umrichter (9) in den Spindelantrieb (7) gespeister Motorstrom in ein in dem Spindelantrieb (7) wirkendes Drehmoment umrechenbar ist, umfassen.

**3.** Parametrierverfahren nach Anspruch 1 oder 2, **dadurch gekennzeichnet ,** **dass** die Motordaten (D) des Antriebsmotors (8) des Spindelantriebs (7) den Motortyp, die Nenndrehzahl und/oder das Auslegungsmoment des Antriebsmotors (8) umfassen.

4. Parametrierverfahren nach einem der obigen Ansprüche,
   **dadurch gekennzeichnet ,**
   **dass** die Recheneinrichtung (10) im Rahmen der Ermittlung der möglichen Beschleunigungszeiten (T2) auch eine in der Spindel (6) auftretende Reibung berücksichtigt.

5. Parametrierverfahren nach Anspruch 4,
   **dadurch gekennzeichnet ,**
   **dass** Kenndaten der in der Spindel (6) auftretenden Reibung der Recheneinrichtung (10) von der Bedienperson (13) vorgegeben werden oder dass die Recheneinrichtung (10) die Kenndaten der in der Spindel (6) auftretenden Reibung anhand messtechnisch erfasster Betriebsdaten der Spindel (6) ermittelt.

6. Parametrierverfahren nach einem der obigen Ansprüche,
   **dadurch gekennzeichnet ,**
   **dass** die Recheneinrichtung (10) von der Bedienperson (13) trägheitsrelevante Größen entgegennimmt, welche die Recheneinrichtung (10) bei der Ermittlung des resultierenden Trägheitsmoments ($\Theta R$) zusätzlich zum Trägheitsmoment ($\Theta$) der Spindel (6) einschließlich des Spindelantriebs (7) berücksichtigt.

7. Parametrierverfahren nach einem der Ansprüche 1 bis 6,
   **dadurch gekennzeichnet ,**
   **dass** die Prozessdaten (D) zusätzlich zum Prozessmoment (M1) auch die Bearbeitungszeit (T1) umfassen und dass die Recheneinrichtung (10) für Werte um das Prozessmoment (M1) und/oder die Bearbeitungszeit (T1) herum die jeweils erreichbare Beschleunigungszeit (T2) ermittelt und an die Bedienperson (13) ausgibt.

8. Parametrierverfahren nach einem der Ansprüche 1 bis 6,
   **dadurch gekennzeichnet ,**
   **dass** die Prozessdaten (PD) die Bearbeitungszeit (T1) nicht umfassen und dass die Recheneinrichtung (10) die minimal mögliche Beschleunigungszeit (T2) ermittelt und für die minimal mögliche Beschleunigungszeit (T2) die minimal erforderliche Bearbeitungszeit (T1) als Funktion des auftretenden Prozessmoments (M1) oder umgekehrt das maximal zulässige Prozessmoment (M1) als Funktion der Bearbeitungszeit (T1) ermittelt und an die Bedienperson (13) ausgibt.

9. Computerprogramm, das Maschinencode (12) umfasst, der von einer zumindest an eine numerische Steuerung (3) ankoppelbaren Recheneinrichtung (10) abarbeitbar ist, wobei die Abarbeitung des Maschinencodes (12) durch die Recheneinrichtung (10) bewirkt, dass die Recheneinrichtung (10) ein Parametrierverfahren nach einem der obigen Ansprüche ausführt.

10. Recheneinrichtung, die zumindest an eine numerische Steuerung (3) ankoppelbar ist und mit einem Computerprogramm (11) nach Anspruch 9 programmiert ist, so dass sie im Betrieb ein Parametrierverfahren nach einem der Ansprüche 1 bis 8 ausführt.

## Claims

1. Parameterisation method for a numerical control (3),

   - wherein in normal operation, during a respective acceleration time (T2), the numerical control (3) iteratively accelerates a spindle (6) of a machine tool controlled by the numerical control (3) by means of a spindle drive (7) and during a respective machining time (T1), machines a workpiece (5) by means of a respective tool (4) held in the spindle (6), wherein during the respective machining time (T1), the spindle drive (7) rotates the tool (4) at an operating speed (nA) and loads it with a respective process torque (M1),
   - wherein the spindle drive (7) has a drive motor (8), which is supplied with current via a converter (9) of the spindle drive (7), so the spindle drive (7) generates a torque,
   - wherein before implementation of normal operation, limit values (IM, PM, MM, aM) to be observed by the numerical control (3) and the spindle drive (7) during the course of a workflow are ascertained in a computing facility (10) coupled to the numerical control (3) and are transmitted by the computing facility (10) to the numerical control (3) and the converter (9) and
   - wherein during the course of processing of the workflow, the computing facility (10)

     -- transmits a command to the numerical control (3) to briefly actuate the spindle drive (7), during the brief actuation, receives from the numerical control (3) a loading of the spindle drive (7) with a drive torque and data about an acceleration of the spindle (6) prompted during the brief actuation and by considering this data, ascertains a moment of inertia ($\Theta$) of the spindle (6), including the spindle drive (7),

-- retrieves parameters (P) directly or via the numerical control (3) from the converter (9) of the spindle drive (7), which parameters describe the maximum possible operating limits of the converter (9),

-- retrieves motor data (D) of the drive motor (8) of the spindle drive (7) directly or via the numerical control (3) from the converter (9) of the spindle drive (7), from which data the maximum possible torque of the spindle drive (7) can be ascertained as a function of the speed of the drive motor (8),

-- receives process data (PD) from an operator (13), wherein the process data (PD) comprises at least the process torque (M1),

-- by considering the operating speed (nA), a resulting moment of inertia ($\Theta$R) ascertained by considering the moment of inertia ($\Theta$) of the spindle (6), including the spindle drive (7), the parameters (P) retrieved from the converter (9) and the motor data (D) retrieved from the converter (9) and the process data (PD) for possible acceleration times (T2), ascertains the associated necessary currents and torques and the thermal losses (V2) that occur in the spindle drive (7) in this connection and ascertains the thermal losses (V1) that occur in the spindle drive (7) in this connection for possible process torques (M1),

-- ascertains combinations of acceleration times (T2), process torques (M1) and machining times (T1) at which the mean thermal losses (VM) do not overshoot a predetermined loss limit (VG),

-- offers the operator (13) the ascertained combinations of acceleration times (T2), process torques (M1) and machining times (T1) for selection and receives a selection of such a combination from the operator (13) and

-- on the basis of the selection of the operator (13), ascertains the limit values (IM, PM, MM, aM) to be observed by the numerical control (3) and the spindle drive (9),

wherein

the limit values (IM, PM) to be observed by the numerical control (3) comprise the maximum current (IM) and the power (PM), which the converter (9) supplies to the drive motor (8), and the limit values (MM, aM) to be observed by the spindle drive (7) comprise the maximum torque (MM) applied by the spindle drive (7) and a maximum acceleration (aM) of the spindle drive (7).

2. Parameterisation method according to claim 1, **characterised in that**

the parameters (P), which the computing facility (10) retrieves from the converter (9), comprise the current limit of the semiconductor switches, the power limit of the converter (9), the torque limit of the spindle drive (7), the torque limit of the spindle (6) and/or the conversion factor by means of which a motor current fed into the spindle drive (7) by the converter (9) can be converted into a torque acting on the spindle drive (7).

3. Parameterisation method according to claim 1 or 2, **characterised in that**

the motor data (D) of the drive motor (8) of the spindle drive (7) comprises the type of motor, the nominal speed and/or the design torque of the drive motor (8).

4. Parameterisation method according to one of the preceding claims, **characterised in that**

during the course of ascertaining the possible acceleration times (T2), the computing facility (10) also considers a friction that occurs in the spindle (6).

5. Parameterisation method according to claim 4, **characterised in that**

characteristics of the friction that occurs in the spindle (6) are specified to the computing facility (10) by the operator (13) or that the computing facility (10) ascertains the characteristics of the friction that occurs in the spindle (6) on the basis of metrologically acquired operating data of the spindle (6).

6. Parameterisation method according to one of the preceding claims, **characterised in that**

the computing facility (10) receives inertia-relevant variables from the operator (13), which the computing facility (10) considers when ascertaining the resulting moment of inertia ($\Theta$R), in addition to the moment of inertia ($\Theta$) of the spindle (6), including the spindle drive (7).

7. Parameterisation method according to one of claims 1 to 6, **characterised in that**

in addition to the process torque (M1), the process data (D) also comprises the machining time (T1), and that for values around the process torque (M1) and/or the machining time (T1), the computing facility (10) ascertains the respectively achievable acceleration time (T2) and outputs it to the operator (13).

8. Parameterisation method according to one of claims 1 to 6, **characterised in that**

the process data (PD) does not comprise the machining time (T1) and that the computing facility (10) ascertains the minimum possible acceleration time (T2) and for the minimum possible acceleration time (T2), the minimum necessary machining time (T1) as a function of the process torque (M1) that occurs or, conversely, the maximum admissible process torque (M1) as a function of the machining time (T1), and outputs it to the operator (13).

9. Computer program, comprising machine code (12) which can be processed by a computing facility (10) which can be coupled at least to one numerical control (3), wherein processing of the machine code (12) by the computing facility (10) prompts the computing facility (10) to carry out a parameterisation method according to one of the preceding claims.

10. Computing facility which can be coupled at least to one numerical control (3) and is programmed with a computer program (11) according to claim 9, so in operation it carries out a parameterisation method according to one of claims 1 to 8.

**Revendications**

1. Procédé de paramétrage d'une commande (3) numérique,

- dans lequel la commande (3) numérique, dans un fonctionnement normal, accélère, au moyen d'un entraînement (7) à broche itérativement pendant un temps (T2) d'accélération respectif, une broche (6) d'une machine-outil commandée par la commande (3) numérique et, pendant un temps (T1) d'usinage respectif, usine une pièce (5) au moyen d'un outil (4) respectif tenu dans la broche (6), dans lequel l'entraînement (7) à broche fait tourner l'outil (4) pendant le temps (T1) d'usinage respectif à une vitesse (nA) de rotation de travail et lui applique un couple (M1) de processus respectif,
- dans lequel l'entraînement (7) à broche a un moteur (8) d'entraînement, qui est alimenté en courant par un convertisseur (9) de l'entraînement (7) à broche, de manière à ce que l'entraînement (7) à broche produise un couple,
- dans lequel, avant la réalisation du fonctionnement normal, il est déterminé dans un dispositif (10) informatique raccordé à la commande (3) numérique dans le cadre d'un workflow, des valeurs (IM, PM, MM, aM) limites à observer par la commande (3) numérique et l'entraînement (7) à broche, et elles sont transmises du dispositif (10) informatique à la commande (3) numérique et au convertisseur (9), et
- dans lequel le dispositif (10) informatique dans le cadre de l'élaboration du workflow,

-- transmet à la commande (3) numérique une instruction de commande à bref délai de l'entraînement (7) à broche, reçoit de la commande (3) numérique pendant la commande à bref délai une alimentation de l'entraînement (7) à broche avec un couple d'entraînement et des données sur une accélération, provoquée pendant la commande à bref délai, de la broche (6) et, en tenant compte de ces données, détermine un moment (Θ) d'inertie de la broche (6) y compris de l'entraînement (7) à broche,

-- appelle, directement ou par l'intermédiaire de la commande (3) numérique, du convertisseur (9) de l'entraînement (7) à broche des paramètres (P), qui décrivent les limites de fonctionnement possibles au maximum du convertisseur (9),

-- directement ou par l'intermédiaire de la commande (3) numérique, appelle du convertisseur (9) de l'entraînement (7) à broche des données (D) du moteur (8) d'entraînement de l'entraînement (7) à broche, à partir desquelles le couple possible au maximum de l'entraînement (7) à broche peut être déterminé comme fonction de la vitesse de rotation du moteur (8) d'entraînement,

-- reçoit d'une personne (13) de service des données (PD) de processus, dans lequel les données (PD) de processus comprennent au moins le couple (M1) de processus,

-- en tenant compte de la vitesse (nA) de rotation de travail, d'un moment (ΘR) d'inertie résultant déterminé, en tenant compte du moment (Θ) d'inertie de la broche (6), y compris de l'entraînement (7) à broche, des paramètres (P) appelés du convertisseur (9) et des données (D) de moteur appelées du convertisseur (9) et des données (PD) de processus pour des temps (T2) d'accélération possibles, détermine les courants et couples nécessaires associés et les pertes (V2) thermiques se produisant ainsi dans l'entraînement (7) à broche et détermine pour des couples (M1) de processus possibles, les pertes (V1) thermiques se produisant ainsi dans l'entraînement (7) à broche,

-- détermine des combinaisons de temps (T2) d'accélération, de couples (M1) de processus et de temps (T1) d'usinage, pour lesquels les pertes (VM) thermiques moyennes ne dépassent pas une limite (VG) de pertes déterminée à l'avance,

-- et offre au choix à la personne (13) de service les combinaisons déterminées de temps (T2) d'accélération, de couples (M1) de processus et de temps (T1) d'usinage, et reçoit de la personne (13) de service un choix d'une combinaison de ce genre, et

-- sur la base du choix de la personne (13) de service, détermine les valeurs (IM, PM, MM, aM) limites à observer par la commande (3) numérique et par l'entraînement (9) à broche,

dans lequel les valeurs (IM, PM) limites à observer par la commande (3) numérique comprennent le courant (IM) et la puissance (PM), que le convertisseur (9) apporte au maximum au moteur (8) d'entraînement, et les valeurs (MM, aM) limites à observer par l'entraînement (7) à broche comprennent le couple (MM) appliqué au maximum par l'entraînement (7) à broche et l'accélération (aM) maximum de l'entraînement (7) à broche.

2. Procédé de paramétrage suivant la revendication 1, **caractérisé en ce que** les paramètres (P), que le dispositif (10) informatique appelle du convertisseur (9), comprennent la limite de courant de l'interrupteur à semiconducteur, la limite de puissance du convertisseur (9), la limite de couple de l'entraînement (7) à broche, la limite de couple de la broche (6) et/ou le facteur de calcul, au moyen duquel un courant du moteur, envoyé par le convertisseur (9) dans l'entraînement (7) à broche, peut être recalculé en un couple s'appliquant à l'entraînement (7) à broche.

3. Procédé de paramétrage suivant la revendication 1 ou 2, **caractérisé en ce que** les données (D) du moteur (8) d'entraînement de l'entraînement (7) à broche comprennent le type du moteur, la vitesse de rotation nominale et/ou le couple de conception du moteur (8) d'entraînement.

4. Procédé de paramétrage suivant l'une des revendications précédentes, **caractérisé en ce que** le dispositif (10) informatique prend en compte, dans le cadre de la détermination des temps (T2) d'accélération possibles, également un frottement se produisant dans la broche (6).

5. Procédé de paramétrage suivant la revendication 4, **caractérisé en ce que** des données caractéristiques du frottement apparaissant dans la broche (6) sont données à l'avance au dispositif (10) informatique par la personne (13) de service ou en ce que le dispositif (10) informatique détermine, à l'aide de données de fonctionnement relevées en technique de mesure, de la broche (6), les données caractéristiques du frottement se produisant dans la broche (6).

6. Procédé de paramétrage suivant l'une des revendications précédentes, **caractérisé en ce que** le dispositif (10) informatique reçoit de la personne (13) de service des grandeurs pertinentes pour l'inertie, que le dispositif (10) informatique prend en compte lors de la détermination du couple $(\Theta R)$ d'inertie résultant, en plus du couple $(\Theta)$ d'inertie de la broche (6), y compris de l'entraînement (7) à broche.

7. Procédé de paramétrage suivant l'une des revendications 1 à 6, **caractérisé en ce que** les données (D) de processus comprennent, en plus du couple (M1) de processus, également le temps (T1) d'usinage et en ce que le dispositif (10) informatique détermine pour des valeurs autour du couple (M1) de processus et/ou du temps (T1) d'usinage, le temps (T2) d'accélération respectif pouvant être atteint et le donne à la personne (13) de service.

8. Procédé de paramétrage suivant l'une des revendications 1 à 6, **caractérisé en ce que** les données (PD) de processus ne comprennent pas le temps (T1) d'usinage et en ce que le dispositif (10) informatique détermine le temps (T2) d'accélération possible au minimum et, pour le temps (T2) d'accélération possible au minimum, donne le temps (T1) d'usinage nécessaire au minimum comme fonction du couple (M1) de processus se produisant ou inversement le couple (M1) de processus admissible au maximum comme fonction du temps (T1) d'usinage et le donne à la personne (13) de service.

9. Programme d'ordinateur, qui comprend un code (12) machine, qui peut être élaboré par un dispositif (10) informatique pouvant être raccordé à une commande (3) numérique, dans lequel l'élaboration du code (12) machine par le dispositif (10) informatique, fait que le dispositif (10) informatique exécute un procédé de paramétrage suivant l'une des revendications précédentes.

10. Dispositif informatique, qui peut être raccordé au moins à une commande (3) numérique et qui est programmé par un programme (11) d'ordinateur suivant la revendication 9, de manière à ce qu'il exécute en fonctionnement, un procédé de paramétrage suivant l'une des revendications 1 à 8.

FIG 1

FIG 2

FIG 3

# FIG 4

- S1
- S2
- S3
  - −
  - +
- IM, PM, MM, aM — S4
- S5
- S6
  - −
  - +
- IM, PM, MM, aM — S7
- IM, PM, MM, aM — S8
- IM, PM, MM, aM → 3 — S9
- S10
- S11

# FIG 5

## FIG 6

FIG 7

$\Theta$ — S34

— S51

— S52

$\Theta R(\Theta)$ — S35

## FIG 8

S37

## FIG 9

S61

S62

S63

# FIG 10

PD — S71

T2 — S72

V2 (T2) — S73

V1 (P1) — S74

(T1, T2, M1) : VM ≤ VG — S75

→ 13 — S76

— S77

IM, PM, MM, aM — S78

# FIG 11

PD — S81

T2 — S82

V2 (T2) — S83

V1 (P1) — S84

(T1, T2, M1) : VM ≤ VG — S85

→ 13 — S86

— S87

IM, PM, MM, aM — S88

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3518051 A1